# EUROPÄISCHE PATENTSCHRIFT

(11) **EP 3 300 924 B1**
(45) Veröffentlichungstag und Bekanntmachung des Hinweises auf die Patenterteilung: **14.08.2019**
(21) Anmeldenummer: 17178549.6
(22) Anmeldetag: 29.06.2017
(51) Int. Cl.: B60C 11/00

(54) **FAHRZEUGLUFTREIFEN**
PNEUMATIC TYRES FOR A VEHICLE
PNEUMATIQUES DE VÉHICULE

(30) Priorität: 30.09.2016 DE 102016218940
(43) Veröffentlichungstag der Anmeldung: 04.04.2018
(73) Patentinhaber: Continental Reifen Deutschland GmbH, 30165 Hannover (DE)
(72) Erfinder: Weber, Christian, 30826 Garbsen (DE); Kendziorra, Norbert, 30827 Garbsen (DE)
(74) Vertreter: Finger, Karsten

(56) Entgegenhaltungen:
- EP-A1- 0 662 396
- EP-A1- 2 052 880
- WO-A1-2009/124807
- JP-A- 2006 240 507
- US-A- 4 385 653
- US-A1- 2010 212 799

## Beschreibung

Die Erfindung betrifft einen Fahrzeugluftreifen in Radialbauart mit einem Laufstreifen mit einem zentralen Laufstreifenteil und zwei in axialer Richtung jeweils unmittelbar an den zentralen Laufstreifenteil anschließenden schulterseitigen Laufstreifenteilen, wobei die Laufstreifenteile über den Laufstreifenumfang jeweils eine konstante Breite aufweisen, wobei der zentrale Laufstreifenteil einteilig ist und aus einem ersten Gummimaterial besteht oder wobei der zentrale Laufstreifenteil mehrteilig ist und aus mehreren ersten Gummimaterialien besteht, wobei die schulterseitigen Laufstreifenteile aus einem zweiten Gummimaterial bestehen und wobei das bzw. die Gummimaterial(ien) des zentralen Laufstreifenteiles gemäß DIN 53512 einen kleineren Verlustfaktor bei 70°C als das Gummimaterial der schulterseitigen Laufstreifenteile aufweist bzw. aufweisen, wobei der zentrale Laufstreifenteil in axialer Richtung eine Breite von 90% bis 100% der Bodenaufstandsflächenbreite des Laufstreifens aufweist, wobei die Bodenaufstandsflächenbreite der Breite des statisch ermittelten Footprints gemäß E.T.R.T.O.-Standards (Last bei 70% der Tragfähigkeit bei einem Innendruck von 2,5 bar, Innendruck 85% von 2,5 bar) entspricht.

Ein Fahrzeugluftreifen der eingangs genannten Art ist beispielsweise aus der EP 0 662 396 A1 bekannt. Der Laufstreifen dieses Reifens weist daher einen zentralen Laufstreifenteil und schulterseitige Laufstreifenteile auf. Die schulterseitigen Laufstreifenteile befinden sich abschnittsweise innerhalb der Bodenaufstandsfläche, der zentrale Laufstreifenteil weist in axialer Richtung eine Breite von 82% bis 96% der Bodenaufstandsflächenbreite auf. Das Gummimaterial des zentralen Laufstreifenteiles weist einen Verlustfaktor bei 60°C von beispielsweise 0,09 auf und das Gummimaterial der schulterseitigen Laufstreifenteile weist einen Verlustfaktor bei 60°C von beispielsweise 0,10 auf.

Aus der US 4 385 653 A ist ein weiterer Fahrzeugluftreifen mit einem Laufstreifen mit einem zentralen Laufstreifenteil und schulterseitigen Laufstreifenteilen bekannt. Das Gummimaterial des zentralen Laufstreifenteiles weist einen Verlustfaktor tan δ von höchstens 0,15, beispielsweise 0,117, auf, gemessen mittels eines dynamischen Viskoelastometers bei 60°C und einer Frequenz von 11 Hz. Das Gummimaterial der schulterseitigen Laufstreifenteile weist einen Verlustfaktor tan δ auf, welcher größer ist als 0,15, beispielsweise 0,211. An der Laufstreifenaußenfläche weisen die schulterseitigen Laufstreifenteile zur Äquatorialebene des Reifens in axialer Richtung jeweils einen Abstand von 50% bis 80% der Breite einer Laufstreifenhälfte auf, wobei die Breite in axialer Richtung zwischen der Äquatorialebene und der jeweiligen axial außenliegenden Randkante des Laufstreifens ermittelt wird. Dementsprechend weist der zentrale Laufstreifenteil an der Laufstreifenoberfläche in axialer Richtung eine Breite auf, welche 50% bis 80% der gesamten Laufstreifenbreite entspricht. Ein derart ausgeführter Reifen soll einen geringen Rollwiderstand, gute Bremseigenschaften sowie gute Fahreigenschaften bei hoher Geschwindigkeit aufweisen.

Aus der DE 699 27 066 T2 ist ein Fahrzeugluftreifen mit einem in axialer Richtung zwei- oder dreigeteilten Laufstreifen bekannt. Der zweigeteilte Laufstreifen weist eine asymmetrische Profilierung auf und setzt sich aus einem bei montiertem Fahrzeugluftreifen fahrzeugaußenseitigen Laufstreifenabschnitt A und einem fahrzeuginnenseitigen Laufstreifenabschnitt I zusammen, wobei der Laufstreifenabschnitt I eine Breite von 25% bis 80% der Gesamtbreite des Laufstreifens aufweist. Das Gummimaterial des fahrzeuginnenseitigen Laufstreifenabschnittes I weist ein kleineres Speichermodul als das Gummimaterial des fahrzeugaußenseitigen Laufstreifenabschnittes A auf. Die Speichermodule wurden an zylindrischen Versuchsstücken mit einem Durchmesser von 14 mm und einer Länge von 25 mm mit einer sinusförmigen Verformungssequenz von 100Hz an einem zu 25% zusammengedrückten Probekörper, welcher einer weiteren Verformung von 3,5% bezüglich des unverformten Probekörpers unterworfen wurde, ermittelt. Vor dem Prüfen wurde der Probekörper einem herkömmlichen Konditionszyklus unterworfen. Das Gummimaterial des fahrzeuginnenseitigen Laufstreifenabschnittes I weist einen Verlustfaktor tan δ bei 23°C von 0,41 und einen Verlustfaktor tan δ bei 70°C von 0,3 auf. Das Gummimaterial des fahrzeugaußenseitigen Laufstreifenabschnittes A weist einen Verlustfaktor tan δ bei 23°C von 0,445 und einen Verlustfaktor tan δ bei 70°C von 0,335 auf. Bei dem aus der DE 699 27 066 T2 bekannten dreigeteilten Laufstreifen ist ein zentraler Abschnitt vorgesehen, welcher in der axialen Mitte des Laufstreifens angeordnet ist. Das Gummimaterial des zentralen Laufstreifenabschnittes weist ein niedrigeres Speichermodul als das Gummimaterial der schulterseitigen Laufstreifenabschnitte auf.

Die US 2010 021 279 9 A1 offenbart einen Motorradreifen mit einem Laufstreifen mit einem zentralen Laufstreifenteil, welcher einen Verlustfaktor bei 70°C von 0,05 bis 0,15 aufweist. Durch einen solchen Reifen soll sich der Kraftstoffverbrauch senken lassen.

Ferner offenbart die JP 2006 240 507 A einen Fahrzeugluftreifen mit einem in axialer Richtung dreigeteilten Laufstreifen. Das Gummimaterial des zentralen Laufstreifenteils weist einen Verlustfaktor bei 60°C von höchstens 0,10 auf und das Gummimaterial der schulterseitigen Laufstreifenteile weist einen Verlustfaktor bei 0°C von mindestens 0,60 auf. Dieser Reifen soll einen geringeren Rollwiderstand und gute Nassbremseigenschaften aufweisen.

Aus der EP 2 052 880 A1 ist ein Fahrzeugluftreifen mit einem Laufstreifen, welcher zumindest einseitig einen schulterseitigen Laufstreifenteil und einen weiteren, bei zwei schulterseitigen Laufstreifenteilen zentralen Laufstreifenteil aufweist. Der schulterseitige Laufstreifenteil ist aus einer Kautschukmischung gefertigt, welche 40 phr bis 90 phr Füllstoffe enthält, wobei 20 phr bis 80 phr Ruß und 10 phr bis 40 phr Silica enthalten sind. Der weitere Laufstreifenteil ist aus einer Kautschukmischung gefertigt, welche 40 phr bis 100 phr Füllstoffe enthält, wobei 40 phr bis 100 phr Silica und 0 phr bis 40 phr Ruß enthalten sind.

Ferner offenbart die WO 2009 124 807 A1 einen Fahrzeugluftreifen mit einem Laufstreifen, welcher zumindest zwei Laufstreifenteile aufweist, welche beim Abrollen mit dem Untergrund in Kontakt treten. Die Kautschukmischung des einen Laufstreifenteiles enthält einen SSBR-Kautschuk und die Kautschukmischung des anderen Laufstreifenteils enthält einen SSBR-Kautschuk, welcher eine Glasübergangstemperatur aufweist, die um mindestens 20°C höher ist als die Glasübergangstemperatur des anderen SSBR-Kautschuks. Dadurch sollen sich die Dämpfungs- und Reißeigenschaften der Laufstreifenteile unterscheiden, wobei ein gleichmäßiger Laufstreifenabrieb ermöglicht sein soll.

Bei Bemühungen, das Gummimaterial eines Laufstreifens sowohl hinsichtlich des Rollwiderstandes als auch hinsichtlich der Brems- und Handlingeigenschaften zu verbessern, besteht ein Zielkonflikt, d.h. eine Verbesserung des Rollwiderstandes geht meist mit einer Verschlechterung der Brems- und Handlingeigenschaften einher. Dabei ist es bekannt, Laufstreifen in axialer Richtung dreiteilig auszuführen, wobei die schulterseitigen Laufstreifenteile aus einem Gummimaterial bestehen, welches dem Reifen bessere Brems- und Handlingeigenschaften verleihen soll, und der zentralen Laufstreifenteil aus einem Gummimaterial besteht, welches dem Reifen einen geringen Rollwiderstand verleihen soll.

Der Erfindung liegt die Aufgabe zugrunde, bei einem Fahrzeugluftreifen der eingangs genannten Art gute Brems- und Handlingeigenschaften sicherzustellen und den Rollwiderstand deutlich, mehr als bisher, zu senken.

Die gestellte Aufgabe wird erfindungsgemäß dadurch gelöst, dass das bzw. die Gummimaterial(ien) des zentralen Laufstreifenteiles eine größere Rückprallelastizität bei 70°C als das Gummimaterial der schulterseitigen Laufstreifenteile aufweist bzw. aufweisen, wobei die Rückprallelastizität bei 70°C des Gummimaterials bzw. der Gummimaterialien des zentralen Laufstreifenteiles 45% bis 70%, insbesondere 50% bis 65%, beträgt.

Erfindungsgemäß ist es daher vorgesehen, dass der zentrale Laufstreifenteil nahezu vollständig oder vollständig die Bodenaufstandsfläche bei Geradeausfahrt einnimmt. Ein Laufstreifen mit einem derartigen zentralen Laufstreifenteil verleiht dem erfindungsgemäßen Fahrzeugluftreifen einen besonders geringen Rollwiderstand. Die schulterseitigen Laufstreifenteile bestehen aus einem Gummimaterial mit einem größeren Verlustfaktor bei 70°C und befinden sich bei Geradeausfahrt außerhalb oder nahezu vollständig außerhalb der Bodenaufstandsfläche. Beim Fahren von Kurven, insbesondere mit hoher Geschwindigkeit, verlagert sich die Bodenaufstandsfläche in Richtung der Kurvenaußenseite, sodass der der Kurvenaußenseite zugewandte schulterseitige Laufstreifenteil mit dem Untergrund in Kontakt tritt. Beim Bremsen des Fahrzeuges verbreitert sich die Bodenaufstandsfläche des Laufstreifens kurzfristig, wodurch in jedem Fall die schulterseitigen Laufstreifenteile in Kontakt mit dem Untergrund treten bzw. die Kontaktfläche zwischen den schulterseitigen Laufstreifenteilen und dem Untergrund vergrößert wird. Das Gummimaterial der schulterseitigen Laufstreifenteile hat neben dem höheren Verlustfaktor bei 70°C vorzugsweise auch einen höheren Verlustfaktor bei 0°C, wodurch dem Fahrzeug beim Bremsen über die schulterseitigen Laufstreifenteile besonders viel Energie entzogen wird. Schulterseitige Laufstreifenteile aus einem aus einer solchen "Hochgripmischung" gefertigten Gummimaterial verleihen dem Fahrzeugluftreifen daher sehr gute Bremseigenschaften und tragen somit zu einer deutlichen Verkürzung des Bremsweges bei. Bei Kurvenfahrten bewirkt der jeweilige schulterseitige Laufstreifenteil aus der Hochgripmischung eine Erhöhung der Haftung zwischen dem Reifen und der Fahrbahn, wodurch die Kraftübertragung deutlich verbessert wird. Der Rollwiderstand des Fahrzugluftreifens ist durch die gewählten Rückprallelastizitäten bei 70°C besonders gering.

Für einen besonders geringen Rollwiderstand des Fahrzugluftreifens ist es von Vorteil, wenn das bzw. die Gummimaterial(ien) des zentralen Laufstreifenteiles einen Verlustfaktor bei 70°C von 0,05 bis 0,16, insbesondere von 0,08 bis 0,14, aufweist bzw. aufweisen.

Gemäß einer bevorzugten Ausführungsvariante ist vorgesehen, dass der zentrale Laufstreifenteil in axialer Richtung eine Breite von mindestens 95% der Bodenaufstandsflächenbreite des Laufstreifens aufweist.

Zur weiteren Verbesserung der Brems- und Handlingeigenschaften des Reifens können gemäß weiteren Ausführungsvarianten der Erfindung unterschiedliche Maßnahmen im Bereich der schulterseitigen Laufstreifenteile getroffen werden. In diesem Zusammenhang ist es von Vorteil, wenn das Gummimaterial der schulterseitigen Laufstreifenteile einen größeren Verlustfaktor bei 0°C als das bzw. die Gummimaterial(ien) des zentralen Laufstreifenteiles aufweist, wobei der Verlustfaktor bei 0°C des Gummimaterials der schulterseitigen Laufstreifenteile 0,65 bis 1,2, insbesondere bis zu 0,85, beträgt. Ferner ist es in diesem Zusammenhang von Vorteil, wenn das Gummimaterial der schulterseitigen Laufstreifenteile eine geringere Rückprallelastizität bei 25°C als das bzw. die Gummimaterial(ien) des zentralen Laufstreifenteiles aufweist, wobei die Rückprallelastizität bei 25°C des Gummimaterials der schulterseitigen Laufstreifenteile 10% bis 20%, insbesondere 12% bis 18%, beträgt.

Weitere Maßnahmen gemäß bevorzugter Ausführungsvarianten der Erfindung tragen dazu bei, die Brems- und Handlingeigenschaften zu verbessern und gleichzeitig einen geringen, Rollwiderstand zu gewährleisten. So ist es von Vorteil, die Laufstreifenbereiche voneinander zu "entkoppeln", wobei gemäß einer bevorzugten Ausführungsvariante vorgesehen ist, dass zwischen jedem schulterseitigen Laufstreifenteil und dem zentralen Laufstreifenteil eine gerade verlaufende Umfangsrille ausgebildet ist. In diesem Zusammenhang ist es ferner von Vorteil, wenn die Umfangsrillen an der Laufstreifenaußenfläche jeweils eine Breite von 0,5 mm bis 5,0 mm, insbesondere von 2,0 mm bis 4,0 mm, aufweisen. Ferner ist es von Vorteil, wenn die Umfangsrillen in radialer Richtung jeweils eine Tiefe von 4,0 mm bis 10,0 mm, insbesondere von 6,5 mm bis 8,5 mm, aufweisen.

Die Umfangsrillen können dabei sogar außerhalb der Bodenaufstandsfläche oder innerhalb der Bodenaufstandsfläche oder entlang der Grenzen der Bodenaufstandsfläche verlaufen.

Gemäß einer bevorzugten Ausführungsvariante ist das bzw. sind die Gummimaterial(ien) des zentralen Laufstreifenteiles aus einer Kautschukmischung bzw. aus Kautschukmischungen gefertigt, welche eine geringere Gesamtfüllstoffmenge aufweist bzw. aufweisen als die Kautschukmischung, aus welcher das Gummimaterial der schulterseitigen Laufstreifenteile gefertigt ist.

Gemäß einer weiteren bevorzugten Ausführungsvariante ist das bzw. sind die Gummimaterial(ien) des zentralen Laufstreifenteiles aus einer Kautschukmischung bzw. aus Kautschukmischungen gefertigt, welche als Füllstoff ausschließlich Silica oder als Füllstoffe Silica und Ruß mit einem größeren Silica zu Ruß - Verhältnis als jenes der Kautschukmischung, aus welcher die schulterseigen Laufstreifenteile gefertigt sind, enthält bzw. enthalten, wobei die Kautschukmischung(en) des Gummimaterials bzw. der Gummimaterialien des zentralen Laufstreifenteiles vorzugswese ferner zumindest ein NXT-Silan enthält.

Gemäß einer weiteren bevorzugten Ausführungsvariante ist das bzw. sind die Gummimaterial(ien) des zentralen Laufstreifenteiles aus einer Kautschukmischung bzw. aus Kautschukmischungen gefertigt, welche Kautschuk(e) mit einer Glasübergangstemperatur enthält bzw. enthalten, die geringer ist als die Glasübergangstemperatur des Kautschuks bzw. der Kautschuke der Kautschukmischung, aus welcher die schulterseigen Laufstreifenteile gefertigt sind.

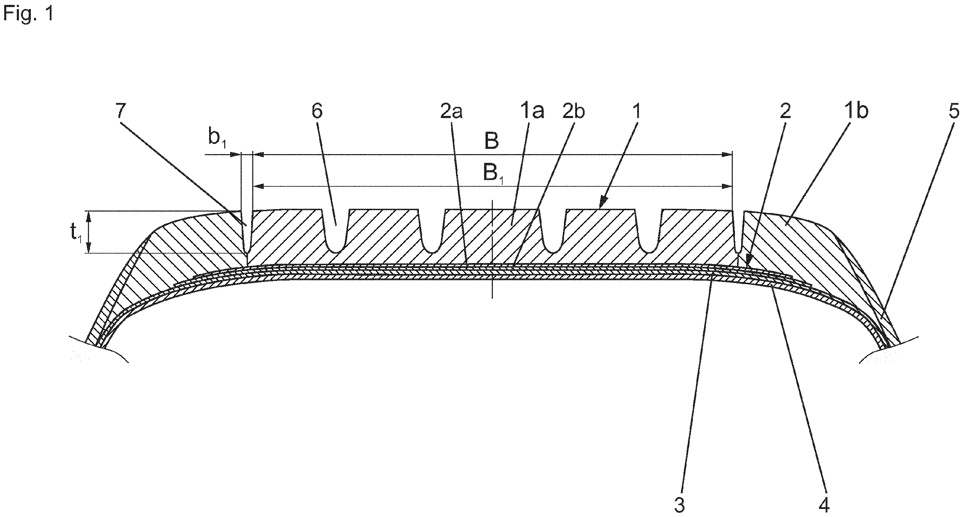

Weitere Merkmale, Vorteile und Einzelheiten der Erfindung werden nun anhand der einzigen Figur, Fig. 1, die schematisch einen Querschnitt durch einen Fahrzeugluftreifen im Bereich des Laufstreifens und des Gürtelverbandes mit einer Ausführungsvariante der Erfindung zeigt, näher erläutert.

In der Tabelle 1 erfolgen die Mengenangaben der Bestandteile von Kautschukmischungen in der in der Kautschuktechnologie üblichen Einheit phr (parts per hundred parts rubber). Die Mengenangaben beziehen sich dabei jeweils auf 100 Massenteile des Grundpolymers bzw. bei Polymerblends auf jene der Grundpolymere.

Erfindungsgemäße Reifen sind Reifen in Radialbauart für Personenkraftwagen, Vans oder Light-Trucks.

In Fig. 1 sind von den wesentlichen Bauteilen eines PKW-Reifens in Radialbauart ein Laufstreifen 1, ein zweilagiger Gürtelverband 2, Abschnitte einer einlagigen Karkasseinlage 3 und einer luftdichten Innenschicht 4 sowie die radial äußeren Endbereiche von Seitenwänden 5 dargestellt. Die Karkasseinlage 3, die Innenschicht 4 und die Seitenwände 5 können in an sich bekannter Weise ausgeführt sein.

Die zwei Gürtellagen 2a, 2b des Gürtelverbandes 2 bestehen jeweils aus zueinander im Wesentlichen parallel verlaufenden Festigkeitsträgern, insbesondere Stahlkorden, die in eine Gummimischung eingebettet sind. Die Festigkeitsträger verlaufen unter den üblichen spitzen Winkel zur Reifenumfangsrichtung, wobei die Festigkeitsträger der beiden Gürtellagen 2a, 2b einander vorzugsweise in bekannter Weise kreuzen.

Der Laufstreifen 1 weist eine Bodenaufstandsflächenbreite B auf, welche der Breite des statisch ermittelten Footprints gemäß E.T.R.T.O.-Standards (Last bei 70% der Tragfähigkeit bei einem Innendruck von 2,5 bar, Innendruck 85% von 2,5 bar) entspricht.

Bei der dargestellten Ausführung ist der Laufstreifen 1 in axialer Richtung dreigeteilt und setzt sich aus einem zentralen Laufstreifenteil 1a und zwei schulterseitigen Laufstreifenteilen 1b zusammen. Der zentrale Laufstreifenteil 1a besteht aus einem ersten Gummimaterial und die schulterseitigen Laufstreifenteile 1b bestehen aus einem zweiten, für beide schulterseitigen Laufstreifenteile 1b gleichen Gummimaterial. Der zentrale Laufstreifenteil 1a und die schulterseitigen Laufstreifenteile 1b sind daher aus unterschiedlichen Kautschukmischungen gefertigt.

Der zentrale Laufstreifenteil 1a weist in axialer Richtung an der Laufstreifenaußenfläche eine über den Laufstreifenumfang konstante Breite B₁ von 90% bis 100%, insbesondere von mindestens 95%, der Bodenaufstandsflächenbreite B auf, wobei bei dem in Fig. 1 gezeigten Ausführungsbeispiel die Breite B₁ mit der Bodenaufstandsflächenbreite B übereinstimmt. Der zentrale Laufstreifenteil 1a kann in an sich bekannter Weise profiliert sein, wobei in Fig. 1 beispielhaft vier Umfangsrillen 6 gezeigt sind.

Die beiden schulterseitigen Laufstreifenteile 1b laufen im Querschnitt jeweils in an sich bekannter Weise zur Seitenwand 5 aus und verlaufen beim gezeigten Ausführungsbeispiel jeweils außerhalb der Bodenaufstandsfläche. Ferner verläuft beim gezeigten Ausführungsbeispiel zwischen den schulterseitigen Laufstreifenteilen 1b und dem zentralen Laufstreifenteil la jeweils knapp außerhalb der Bodenaufstandsflächenbreite B eine Umfangsrille 7, welche gerade in Umfangsrichtung umläuft und in radialer Richtung eine Tiefe t₁ von 4,0 mm bis 10,0 mm, vorzugsweise von 6,5 mm bis 8,5 mm, und an der Laufstreifenaußenfläche in axialer Richtung eine Breite b₁ von 0,5 mm bis 5,0 mm, insbesondere von 2,0 mm bis 4,0 mm, aufweist. Exakt an der Grenze zwischen den Laufstreifenteilen 1a, 1b verlaufende Umfangsrillen 7 sind bedingt durch die Materialeigenschaften der Laufstreifenteile 1a, 1b sowie bedingt durch den Herstellungsprozess des Reifens nur schwer zu realisieren. In den unmittelbar an die Umfangsrille 7 angrenzenden Randbereichen der schulterseitigen Laufstreifenteile 1b können sich daher geringfügige Mengen des ersten Gummimaterials des zentrale Laufstreifenteiles 1a befinden. Genau so können in den an die Umfangsrille 7 angrenzenden Randbereichen des zentralen Laufstreifenteiles 1a geringfügige Mengen des zweiten Gummimaterials der schulterseitigen Laufstreifenteile 1b vorzufinden sein. Unter einer "zwischen den Laufstreifenteilen 1a und 1b ausgebildeten Umfangsrille 7" ist im Rahmen der gegenständlichen Erfindung eine solche zu verstehen, die im Bereich der aneinander anschließenden Laufstreifenteile 1a, 1b den Laufstreifen 1 auf eine der oben beschriebenen Weisen voneinander "trennt". Die Umfangsrillen 7 können, wie in Fig. 1 gezeigt, außerhalb der Bodenaufstandsfläche, innerhalb der Bodenaufstandsfläche oder entlang der seitlichen Ränder der Bodenaufstandsfläche verlaufen. Ferner kann der Laufstreifen 1 auch ohne solche Umfangsrillen 7 ausgeführt sein.

In Tabelle 1 sind zwei Beispiele M_{Z1}, M_{Z2} für die Zusammensetzung der Kautschukmischung des zentralen Laufstreifenteiles 1a und zwei Beispiele M_{S1}, M_{S2} für die Zusammensetzung der Kautschukmischung der schulterseitigen Laufstreifenteile 1b angegeben. Tabelle 1 enthält ferner die Verlustfaktoren tan δ bei 0°C und bei 70°C sowie die Rückprallelastizitäten bei Raumtemperatur (25°C) und bei 70°C, jeweils gemäß DIN 53512, sowie die Shore-A-Härten gemäß ISO 868 der aus diesen Kautschukmischungen hergestellten Gummimaterialien.

**Tabelle 1: Zusammensetzungen der Kautschukmischungen, Verlustfaktoren, Rückprallelastizitäten, Shore-A-Härten**

| Bestandteile | M_{z1} | M_{z2} | Mₛ₁ | Mₛ₂ |
|---|---|---|---|---|
| NR (Naturkautschuk) | 25 | 20 | 10 | |
| BR (Butylkautschuk) | | | | 15 |
| ESBR 1739 | | | | 41,25 |
| SSBR1 NS612 | | 40 | | |
| SSBR2 NS616 | 75 | 40 | 20 | |
| SSBR3 HPR650 | | | | 66 |
| SSBR4 Tufdene 3420 | | | 87,5 | |
| MES Öl (Weichmacher) | 5 | 10 | 15 | 10 |
| N339 | | | 5 | 30 |
| Silica VN3 | 90 | 70 | 125 | 110 |
| C5-Resin | 10 | | 30 | 20 |
| Alterungsschutzmittel | 6 | 6 | 7 | 7 |
| (DTPD, 6PPD, TMQ) | | | | |
| Lichtschutzwachs | 2 | 2 | 2 | 2 |
| Zinkoxid | 2 | 2 | 2 | 3 |
| Prozesshilfsmittel | 6 | 6 | 5 | 6 |
| NXT - Silan | 9 | | | |
| TESPD (Triethoxysilylpropyl-Disulfid-Silan) | | 5,6 | 10 | 8 |
| Schwefel | 2 | 2 | 2 | 1,5 |
| Beschleuniger (DPG, TBBS, Stearinsäure) | 4 | 4 | 7 | 7 |
| Shore-A-Härte [Shore A] | 68 | 63 | 68 | 70 |
| Rückprallelastizität (25°C) [%] | 26 | 39 | 16 | 13 |
| Rückprallelastizität (70°C) [%] | 55 | 61 | 38 | 34 |
| tan δ (0°C) | 0,6 | 0,35 | 0,65 | 0,78 |
| tan δ (70°C) | 0,12 | 0,1 | 0,24 | 0,19 |

Die im Nachfolgenden erläuterten sowie in Tabelle 1 erwähnten Rückprallelastizitäten und Verlustfaktoren tan δ können, wie dem Fachmann bekannt ist, insbesondere durch die Füllstoffmenge, die eingesetzten Füllstofftypen, durch das Verhältnis der Füllstoffe Ruß zu Silica (Kieselsäure) sowie durch die eingesetzten Kautschuktypen eingestellt bzw. beeinflusst werden. Hinsichtlich der Kautschuke sind insbesondere deren Glasübergangstemperaturen entscheidend. Insbesondere weisen Kautschukmischungen, aus welchen der zentrale Laufstreifenteil 1a gefertigt wird gegenüber Kautschukmischungen, aus welchen die schulterseitigen Laufstreifenteile 1b gefertigt werden, eine geringere Füllstoffmenge und/oder ausschließlich Silica als Füllstoff und/oder ein höheres Verhältnis von Silica zu Ruß und/oder Polymere mit einer geringeren Glasübergangstemperatur und/oder zumindest ein NXT-Silan, falls Silica enthalten ist, auf.

Das Gummimaterial des zentralen Laufstreifenteiles 1a weist einen kleineren Verlustfaktor tan δ bei 70°C auf als das Gummimaterial der schulterseitigen Laufstreifenteile 1b, wobei das Gummimaterial des zentralen Laufstreifenteiles 1a einen Verlustfaktor tan δ bei 70°C von 0,05 bis 0,16, insbesondere von 0,08 bis 0,14, aufweist. Ferner weist das Gummimaterial des zentralen Laufstreifenteiles 1a eine größere Rückprallelastizität bei 70°C als das Gummimaterial der schulterseitigen Laufstreifenteile 1b auf, wobei die Rückprallelastizität bei 70°C des Gummimaterials des zentralen Laufstreifenteiles 1a 45% bis 70%, insbesondere 50% bis 65%, beträgt. Die Rückprallelastizität bei 70°C und der Verlustfaktor tan δ bei 70°C werden als Indikatoren für den Rollwiderstand des Gummimaterials herangezogen, wobei der Rollwiderstand umso geringer ist, je kleiner der Verlustfaktor tan δ bei 70°C und je größer die Rückprallelastizität bei 70°C sind. Das Gummimaterial des zentralen Laufstreifenteiles 1a ist somit hinsichtlich Rollwiderstand optimiert. Da bei Geradeausfahrt nahezu ausschließlich der zentrale Laufstreifenteil 1a mit dem Untergrund in Kontakt tritt, ist der Rollwiderstand eines erfindungsgemäßen Fahrzeugluftreifens besonders gering.

Ferner weist das Gummimaterial der zentralen Laufstreifenteiles 1a einen Verlustfaktor tan δ bei 0°C von 0,3 bis 0,7 auf.

Das Gummimaterial der schulterseitigen Laufstreifenteile 1b weist einen größeren Verlustfaktor tan δ bei 0°C als das Gummimaterial des zentralen Laufstreifenteiles 1a auf, wobei der Verlustfaktor tan δ bei 0°C des Gummimaterials der schulterseitigen Laufstreifenteile 1b 0,65 bis 1,2, insbesondere von höchstens 0,85, beträgt. Das Gummimaterial der schulterseitigen Laufstreifenteile 1b weist ferner eine geringere Rückprallelastizität bei 25°C als das Gummimaterial des zentralen Laufstreifenteiles 1a auf. Die Rückprallelastizität bei 25°C des Gummimaterials der schulterseitigen Laufstreifenteile 1b beträgt 10% bis 20%, insbesondere von 12% bis 18%. Der Verlustfaktor tan δ bei 0°C und die Rückprallelastizität bei 25°C werden als Indikatoren für die Bremseigenschaften - sowohl auf nasser als auch auf trockener Fahrbahn - herangezogen. Dabei sind ein möglichst großer Verlustfaktor tan δ bei 0°C und eine möglichst geringe Rückprallelastizität bei 25°C für gute Bremseigenschaften von Vorteil. Das Gummimaterial der schulterseitigen Laufstreifenteile 1b ist somit hinsichtlich der Bremseigenschaften des Fahrzeugluftreifens optimiert.

Ferner weist das Gummimaterial der schulterseitigen Laufstreifenteile 1b einen Verlustfaktor tan δ bei 70°C von 0,18 bis 0,4 auf. Die Rückprallelastizität bei 70°C des Gummimaterials der schulterseitigen Laufstreifenteile 1b beträgt 25% bis 45%.

Beim Bremsen des Fahrzeuges verbreitert sich durch die auf den Fahrzeugluftreifen wirkenden Kräfte die Bodenaufstandsfläche des Laufstreifens 1 kurzfristig, wodurch je nach Ausführung, die schulterseitigen Laufstreifenteile 1b teilweise in Kontakt mit dem Untergrund kommen oder die Kontaktfläche zwischen den schulterseitigen Laufstreifenteilen 1b und dem Untergrund vergrößert wird. Da das Gummimaterial der schulterseitigen Laufstreifenteile 1b - im Vergleich zu dem Gummimaterial des zentralen Laufstreifenteiles 1a - einen hohen tan δ bei 0°C und eine geringe Rückprallelastizität bei 25°C aufweist, wird dem Fahrzeug beim Bremsen über die schulterseitigen Laufstreifenteile 1b besonders viel Energie entzogen. Die schulterseitigen Laufstreifenteile 1b verbessern daher die Bremseigenschaften des Fahrzeugluftreifens maßgebend.

Beim Fahren von Kurven, insbesondere mit hoher Geschwindigkeit, verlagert sich die Bodenaufstandsfläche aufgrund der auf den Fahrzeugluftreifen wirkenden Kräfte in Richtung der Kurvenaußenseite, sodass der der Kurvenaußenseite zugewandte schulterseitige Laufstreifenteil 1b teilweise oder mehr mit dem Untergrund in Kontakt kommt. Dadurch wird die Haftung zwischen dem Reifen und der Fahrbahn bzw. die Kraftübertragung vom Reifen auf die Fahrbahn während solcher oft kritischen Fahrsituationen deutlich verbessert. Nach der Kurvenfahrt verlagert sich die Bodenaufstandsfläche zurück in den zentralen Laufstreifenteil 1a, sodass wieder der hinsichtlich des Rollwiderstandes optimierte zentrale Laufstreifenteil 1a mit dem Untergrund in Kontakt tritt.

Bei einer weiteren Ausführungsvariante ist der Laufstreifen 1 in radialer Richtung mehrschichtig, insbesondere zweischichtig, aus einer die Profilierung enthaltenden Laufstreifencap und einer Laufstreifenbase aufgebaut. Bei dieser Variante ist ausschließlich die Laufstreifencap gemäß dem oben beschriebenen Aufbau des Laufstreifens 1 in axialer Richtung dreiteilig mit einem zentralen Laufstreifenteil und zwei schulterseitigen Laufstreifenteilen ausgeführt. Ferner kann auch nur der zentrale Laufstreifenteil in radialer Richtung mehrere Schichten aufweisen, wobei die schulterseitigen Laufstreifenteile gemäß den Laufstreifenteilen 1b der Fig. 1 ausgeführt sind. Der zentrale Laufstreifenteil kann ferner auch in axialer Richtung aus mehreren Teilen bestehen. Die Gummimaterialien sämtlicher Teile eines derart zentralen Laufstreifenteils weisen jeweils die beschriebenen Eigenschaften des Gummimaterials des beispielhaft einteiligen zentralen Laufstreifenteils 1a auf, wobei sich die Eigenschaften dieser Gummimaterialien innerhalb der jeweils erwähnten Bereiche voneinander unterschieden können.

### Bezugsziffernliste

- 1: Laufstreifen
- 1a: zentraler Laufstreifenteil
- 1b: schulterseitiger Laufstreifenteil
- 2: Gürtelverband
- 2a, 2b: Gürtellage
- 3: Karkasseinlage
- 4: Innenschicht
- 5: Seitenwand
- 6, 7: Umfangsrille
- B, B₁, b₁: Breite
- t₁: Tiefe

## Patentansprüche

1. Fahrzeugluftreifen in Radialbauart mit einem Laufstreifen (1) mit einem zentralen Laufstreifenteil (1a) und zwei in axialer Richtung jeweils unmittelbar an den zentralen Laufstreifenteil (1a) anschließenden schulterseitigen Laufstreifenteilen (1b), wobei die Laufstreifenteile (1a, 1b) über den Laufstreifenumfang jeweils eine konstante Breite aufweisen, wobei der zentrale Laufstreifenteil (1a) einteilig ist und aus einem ersten Gummimaterial besteht oder wobei der zentrale Laufstreifenteil (1a) mehrteilig ist und aus mehreren ersten Gummimaterialien besteht, wobei die schulterseitigen Laufstreifenteile (1b) aus einem zweiten Gummimaterial bestehen und wobei das bzw. die Gummimaterial(ien) des zentralen Laufstreifenteiles (1a) gemäß DIN 53512 einen kleineren Verlustfaktor (tan δ) bei 70°C als das Gummimaterial der schulterseitigen Laufstreifenteile (1b) aufweist bzw. aufweisen,
wobei der zentrale Laufstreifenteil (1a) in axialer Richtung eine Breite (B₁) von 90% bis 100% der Bodenaufstandsflächenbreite (B) des Laufstreifens (1) aufweist, wobei die Bodenaufstandsflächenbreite (B) der Breite des statisch ermittelten Footprints gemäß E.T.R.T.O.-Standards (Last bei 70% der Tragfähigkeit bei einem Innendruck von 2,5 bar, Innendruck 85% von 2,5 bar) entspricht,
**dadurch gekennzeichnet,**
**dass** das bzw. die Gummimaterial(ien) des zentralen Laufstreifenteiles (1a) eine größere Rückprallelastizität bei 70°C als das Gummimaterial der schulterseitigen Laufstreifenteile (1b) aufweist bzw. aufweisen, wobei die Rückprallelastizität bei 70°C des Gummimaterials bzw. der Gummimaterialien des zentralen Laufstreifenteiles (1a) 45% bis 70%, insbesondere 50% bis 65%, beträgt.

2. Fahrzeugluftreifen nach Anspruch 1, **dadurch gekennzeichnet, dass** das bzw. die Gummimaterial(ien) des zentralen Laufstreifenteiles (1a) einen Verlustfaktor (tan δ) bei 70°C von 0,05 bis 0,16, insbesondere von 0,08 bis 0,14, aufweist bzw. aufweisen.

3. Fahrzeugluftreifen nach Anspruch 1 oder 2, **dadurch gekennzeichnet, dass** der zentrale Laufstreifenteil (1a) in axialer Richtung eine Breite (B₁) von mindestens 95% der Bodenaufstandsflächenbreite (B) des Laufstreifens (1) aufweist.

4. Fahrzeugluftreifen nach einem der Ansprüche 1 bis 3, **dadurch gekennzeichnet, dass** das Gummimaterial der schulterseitigen Laufstreifenteile (1b) einen größeren Verlustfaktor (tan δ) bei 0°C als das bzw. die Gummimaterial(ien) des zentralen Laufstreifenteiles (1a) aufweist, wobei der Verlustfaktor (tan δ) bei 0°C des Gummimaterials der schulterseitigen Laufstreifenteile (1b) 0,65 bis 1,2, insbesondere bis zu 0,85, beträgt.

5. Fahrzeugluftreifen nach einem der Ansprüche 1 bis 4, **dadurch gekennzeichnet, dass** das Gummimaterial der schulterseitigen Laufstreifenteile (1b) eine geringere Rückprallelastizität bei 25 °C als das bzw. die Gummimaterial(ien) des zentralen Laufstreifenteiles (1a) aufweist, wobei die Rückprallelastizität bei 25°C des Gummimaterials der schulterseitigen Laufstreifenteile (1b) 10% bis 20%, insbesondere 12% bis 18%, beträgt.

6. Fahrzeugluftreifen nach einem der Ansprüche 1 bis 5, **dadurch gekennzeichnet, dass** zwischen jedem der schulterseitigen Laufstreifenteile (1b) und dem zentralen Laufstreifenteil (1a) eine gerade verlaufende Umfangsrille (7) ausgebildet ist.

7. Fahrzeugluftreifen nach Anspruch 6, **dadurch gekennzeichnet, dass** die Umfangsrillen (7) an der Laufstreifenaußenfläche jeweils eine Breite (b₁) von 0,5 mm bis 5,0 mm, insbesondere von 2,0 mm bis 4,0 mm, aufweisen.

8. Fahrzeugluftreifen nach Anspruch 6 oder 7, **dadurch gekennzeichnet, dass** die Umfangsrillen (7) in radialer Richtung jeweils eine Tiefe (t₁) von 4,0 mm bis 10,0 mm, insbesondere von 6,5 mm bis 8,5 mm, aufweisen.

9. Fahrzeugluftreifen nach einem der Ansprüche 6 bis 8, **dadurch gekennzeichnet, dass** die Umfangsrillen (7) außerhalb der Bodenaufstandsfläche verlaufen.

10. Fahrzeugluftreifen nach einem der Ansprüche 6 bis 8, **dadurch gekennzeichnet, dass** die Umfangsrillen (7) innerhalb der Bodenaufstandsfläche verlaufen.

11. Fahrzeugluftreifen nach einem der Ansprüche 6 bis 8, **dadurch gekennzeichnet, dass** die Umfangsrillen (7) entlang der Grenzen der Bodenaufstandsfläche verlaufen.

12. Fahrzeugluftreifen nach einem der Ansprüche 1 bis 11, **dadurch gekennzeichnet, dass** das bzw. die Gummimaterial(ien) des zentralen Laufstreifenteiles (1a) aus einer Kautschukmischung gefertigt ist bzw. aus Kautschukmischungen gefertigt sind, welche eine geringere Gesamtfüllstoffmenge aufweist bzw. aufweisen als die Kautschukmischung, aus welcher das Gummimaterial der schulterseitigen Laufstreifenteile (1b) gefertigt ist.

13. Fahrzeugluftreifen nach einem der Ansprüche 1 bis 12, **dadurch gekennzeichnet, dass** das bzw. die Gummimaterial(ien) des zentralen Laufstreifenteiles (1a) aus einer Kautschukmischung gefertigt ist bzw. aus Kautschukmischungen gefertigt sind, welche als Füllstoff ausschließlich Silica oder als Füllstoffe Silica und Ruß in einem größeren Silica zu Ruß - Verhältnis als die Kautschukmischung, aus welcher die schulterseigen Laufstreifenteile (1b) gefertigt sind, enthält bzw. enthalten, wobei die Kautschukmischung(en) des Gummimaterials bzw. der Gummimaterialien des zentralen Laufstreifenteiles (1a) vorzugsweise ferner zumindest ein NXT-Silan enthält.

14. Fahrzeugluftreifen nach einem der Ansprüche 1 bis 13, **dadurch gekennzeichnet, dass** das bzw. die Gummimaterial(ien) des zentralen Laufstreifenteiles (1a) aus einer Kautschukmischung gefertigt ist bzw. aus Kautschukmischungen gefertigt sind, welche Kautschuk(e) mit einer Glasübergangstemperatur enthält bzw. enthalten, die geringer ist als die Glasübergangstemperatur des Kautschuks bzw. der Kautschuke der Kautschukmischung, aus welcher die schulterseigen Laufstreifenteile (1b) gefertigt sind.

## Claims

1. Pneumatic vehicle tyre of radial construction, having a tread (1) with a central tread part (1a) and two shoulder-side tread parts (1b) that each immediately adjoin the central tread part (1a) in an axial direction, wherein the tread parts (1a, 1b) each have a constant width around the tread circumference, wherein the central tread part (1a) is a one-part tread part and consists of a first rubber material, or wherein the central tread part (1a) is a multi-part tread part and consists of several first rubber materials, wherein the shoulder-side tread parts (1b) consist of a second rubber material and wherein the rubber material(s) of the central tread part (1a) has/have, pursuant to DIN 53512, a lower loss factor (tan δ) at 70°C than the rubber material of the shoulder-side tread parts (1b),
wherein the central tread part (1a) has, in the axial direction, a width (B₁) of 90% to 100% of the ground contact patch width (B) of the tread (1), wherein the ground contact patch width (B) corresponds to the width of the statically determined footprint according to the E.T.R.T.O. standard (load at 70% of the load-bearing capacity at an internal pressure of 2.5 bar, internal pressure 85% of 2.5 bar),
**characterized**
**in that** the rubber material(s) of the central tread part (1a) has/have a greater rebound elasticity at 70°C than the rubber material of the shoulder-side tread parts (1b), wherein the rebound elasticity at 70°C of the rubber material(s) of the central tread part (1a) amounts to 45% to 70%, in particular 50% to 65%.

2. Pneumatic vehicle tyre according to Claim 1, **characterized in that** the rubber material(s) of the central tread part (1a) has/have a loss factor (tan δ) at 70°C of 0.05 to 0.16, in particular of 0.08 to 0.14.

3. Pneumatic vehicle tyre according to Claim 1 or 2, **characterized in that** the central tread part (1a) has, in the axial direction, a width (B₁) of at least 95% of the ground contact patch width (B) of the tread (1).

4. Pneumatic vehicle tyre according to one of Claims 1 to 3, **characterized in that** the rubber material of the shoulder-side tread parts (1b) has a greater loss factor (tan δ) at 0°C than the rubber material(s) of the central tread part (1a), wherein the loss factor (tan δ) at 0°C of the rubber material of the shoulder-side tread parts (1b) amounts to 0.65 to 1.2, in particular up to 0.85.

5. Pneumatic vehicle tyre according to one of Claims 1 to 4, **characterized in that** the rubber material of the shoulder-side tread parts (1b) has a lower rebound elasticity at 25°C than the rubber material(s) of the central tread part (1a), wherein the rebound elasticity at 25°C of the rubber material of the shoulder-side tread parts (1b) amounts to 10% to 20%, in particular 12% to 18%.

6. Pneumatic vehicle tyre according to one of Claims 1 to 5, **characterized in that**, between each of the shoulder-side tread parts (1b) and the central tread part (1a), a circumferential groove (7) extending in a straight line is formed.

7. Pneumatic vehicle tyre according to Claim 6, **characterized in that** the circumferential grooves (7) on the tread outer face each have a width (b₁) of 0.5 mm to 5.0 mm, in particular of 2.0 mm to 4.0 mm.

8. Pneumatic vehicle tyre according to Claim 6 or 7, **characterized in that** the circumferential grooves (7) each have, in a radial direction, a depth (t₁) of 4.0 mm to 10.0 mm, in particular of 6.5 mm to 8.5 mm.

9. Pneumatic vehicle tyre according to one of Claims 6 to 8, **characterized in that** the circumferential grooves (7) extend outside the ground contact patch.

10. Pneumatic vehicle tyre according to one of Claims 6 to 8, **characterized in that** the circumferential grooves (7) extend inside the ground contact patch.

11. Pneumatic vehicle tyre according to one of Claims 6 to 8, **characterized in that** the circumferential grooves (7) extend along the borders of the ground contact patch.

12. Pneumatic vehicle tyre according to one of Claims 1 to 11, **characterized in that** the rubber material(s) of the central tread part (1a) is/are manufactured from (a) rubber compound(s) that has/have a lower total filler content than the rubber compound from which the rubber material of the shoulder-side tread parts (1b) is manufactured.

13. Pneumatic vehicle tyre according to one of Claims 1 to 12, **characterized in that** the rubber material(s) of the central tread part (1a) is/are manufactured from (a) rubber compound(s) that contain(s) only silica as filler or silica and carbon black as fillers in a greater silica to carbon black ratio than the rubber compound from which the shoulder-side tread parts (1b) are manufactured, wherein the rubber compound(s) of the rubber material(s) of the central tread part (1a) preferably also contains at least one NXT silane.

14. Pneumatic vehicle tyre according to one of Claims 1 to 13, **characterized in that** the rubber material(s) of the central tread part (1a) is/are manufactured from (a) rubber compound(s) that contain(s) rubber(s) with a glass transition temperature that is lower than the glass transition temperature of the rubber(s) of the rubber compound from which the shoulder-side tread parts (1b) are manufactured.

## Revendications

1. Pneumatique de véhicule à structure radiale comprenant une bande de roulement (1) dotée d'une partie centrale de bande de roulement (1a) et de deux parties de bande de roulement (1b) du côté des épaulements se raccordant respectivement directement à la partie centrale de bande de roulement (1a) dans la direction axiale, dans lequel les parties de bande de roulement (1a, 1b) présentent respectivement une largeur constante sur la périphérie de bande de roulement, dans lequel la partie centrale de bande de roulement (1a) est en une partie et est constituée d'un premier matériau de caoutchouc ou dans lequel la partie centrale de bande de roulement (1a) est en plusieurs parties et est constituée de plusieurs premiers matériaux de caoutchouc, dans lequel les parties de bande de roulement (1b) du côté des épaulements sont constituées d'un deuxième matériau de caoutchouc, et dans lequel le ou les matériau (x) de caoutchouc de la partie centrale de bande de roulement (1a) présente(nt), selon DIN 53512, un facteur de perte (tan δ) à 70° C inférieur à celui du matériau de caoutchouc des parties de bande de roulement (1b) du côté des épaulements,
dans lequel la partie centrale de bande de roulement (1a) présente, dans la direction axiale, une largeur (B₁) de 90 % à 100 % de la largeur de la surface d'appui au sol (B) de la bande de roulement (1), dans lequel la largeur de la surface d'appui au sol (B) correspond à la largeur de l'empreinte déterminée statiquement selon les normes E.T.R.T.O. (Organisation technique européenne du pneu et de la jante) (charge à 70 % de la capacité de charge pour une pression intérieure de 2,5 bars, et pour une pression intérieure de 85 % de 2,5 bars),
**caractérisé en ce que**
le ou les matériau(x) de caoutchouc de la partie centrale de bande de roulement (1a) présente(nt) une élasticité de rebondissement à 70 °C supérieure à celle du matériau de caoutchouc des parties de bande de roulement (1b) du côté des épaulements, l'élasticité de rebondissement à 70 °C du matériau de caoutchouc ou des matériaux de caoutchouc de la partie centrale de bande de roulement (1a) étant comprise entre 45% et 70%, en particulier entre 50% et 65%.

2. Pneumatique de véhicule selon la revendication 1, **caractérisé en ce que** le ou les matériau(x) de caoutchouc de la partie centrale de bande de roulement (1a) présente(nt) un facteur de perte (tan δ) à 70 °C de 0,05 à 0,16, en particulier de 0,08 à 0,14.

3. Pneumatique de véhicule selon la revendication 1 ou 2, **caractérisé en ce que** la partie centrale de bande de roulement (1a) présente, dans la direction axiale, une largeur (B₁) d'au moins 95 % de la largeur de la surface d'appui au sol (B) de la bande de roulement (1).

4. Pneumatique de véhicule selon l'une des revendications 1 à 3, **caractérisé en ce que** le matériau de caoutchouc des parties de bande de roulement (1b) du côté des épaulements présente un facteur de perte (tan δ) à 0 °C supérieur à celui du ou des matériau (x) de caoutchouc de la partie centrale de bande de roulement (1a), le facteur de perte (tan δ) à 0 °C du matériau de caoutchouc des parties de bande de roulement (1b) du côté des épaulements étant compris entre 0,65 et 1,2, en particulier inférieur ou égal à 0,85.

5. Pneumatique de véhicule selon l'une des revendications 1 à 4, **caractérisé en ce que** matériau de caoutchouc des parties de bande de roulement (1b) du côté des épaulements présente une élasticité de rebondissement à 25 °C inférieure à celle du ou des matériau (x) de caoutchouc de la partie centrale de bande de roulement (1a), l'élasticité de rebondissement à 25 °C du matériau de caoutchouc des parties de bande de roulement (1b) du côté des épaulements étant comprise entre 10 % et 20 %, en particulier entre 12 % et 18 %.

6. Pneumatique de véhicule selon l'une des revendications 1 à 5, **caractérisé en ce qu'**une rainure périphérique (7) s'étendant de manière rectiligne est formée entre chacune des parties de bande de roulement (1b) du côté des épaulements et la partie centrale de bande de roulement (1a).

7. Pneumatique de véhicule selon la revendication 6, **caractérisé en ce que** les rainures périphériques (7) présentent, au niveau de la surface extérieure de bande de roulement, respectivement une largeur (b₁) de 0,5 mm à 5,0 mm, en particulier de 2,0 mm à 4,0 mm.

8. Pneumatique de véhicule selon la revendication 6 ou 7, **caractérisé en ce que** les rainures périphériques (7) présentent, dans la direction radiale, respectivement une profondeur (t₁) de 4,0 mm à 10,0 mm, en particulier de 6,5 mm à 8,5 mm.

9. Pneumatique de véhicule selon l'une des revendications 6 à 8, **caractérisé en ce que** les rainures périphériques (7) s'étendent à l'extérieur de la surface d'appui au sol.

10. Pneumatique de véhicule selon l'une des revendications 6 à 8, **caractérisé en ce que** les rainures périphériques (7) s'étendent à l'intérieur de la surface d'appui au sol.

11. Pneumatique de véhicule selon l'une des revendications 6 à 8, **caractérisé en ce que** les rainures périphériques (7) s'étendent le long des limites de la surface d'appui au sol.

12. Pneumatique de véhicule selon l'une des revendications 1 à 11, **caractérisé en ce que** le ou les matériau(x) de caoutchouc de la partie centrale de bande de roulement (1a) est/sont fabriqué(s) à partir d'un mélange de caoutchouc, respectivement à partir de mélanges de caoutchouc, le(s)quel(s) présente(nt) une quantité totale de charges inférieure à celle du mélange de caoutchouc à partir duquel le matériau de caoutchouc des parties de bande de roulement (1b) du côté des épaulements est fabriqué.

13. Pneumatique de véhicule selon l'une des revendications 1 à 12, **caractérisé en ce que** le ou les matériau(x) de caoutchouc de la partie centrale de bande de roulement (1a) est/sont fabriqué(s) à partir d'un mélange de caoutchouc, respectivement à partir de mélanges de caoutchouc, le(s)quel(s) contien(nen)t, en tant que charge, exclusivement de la silice ou, en tant que charges, de la silice et du noir de carbone dans un rapport silice à noir de carbone supérieur à celui du mélange de caoutchouc à partir duquel les parties de bande de roulement (1b) du côté des épaulements sont fabriquées, le(s) mélange(s) de caoutchouc du matériau de caoutchouc ou des matériaux de caoutchouc de la partie centrale de bande de roulement (1a) contenant de préférence en outre au moins un silane NXT.

14. Pneumatique de véhicule selon l'une des revendications 1 à 13, **caractérisé en ce que** le ou les matériau(x) de caoutchouc de la partie centrale de bande de roulement (1a) est/sont fabriqué(s) à partir d'un mélange de caoutchouc, respectivement à partir de mélanges de caoutchouc, le(s)quel(s) contien(nen)t du/des caoutchouc(s) présentant une température de transition vitreuse qui est inférieure à la température de transition vitreuse du caoutchouc, respectivement des caoutchoucs, du mélange de caoutchouc à partir duquel les parties de bande de roulement (1b) du côté des épaulements sont fabriquées.
